# EUROPEAN PATENT SPECIFICATION

(11) **EP 4 195 572 B1**
(45) Date of publication and mention of the grant of the patent: **31.12.2025**
(21) Application number: 22213268.0
(22) Date of filing: 18.11.2017
(51) Int. Cl.: H04L 5/00, H04W 72/20

(54) **RESOURCE POOL PROCESSING METHOD, DEVICE AND STORAGE MEDIUM**
RESSOURCENPOOLVERARBEITUNGSVERFAHREN, VORRICHTUNG UND SPEICHERMEDIUM
PROCÉDÉ DE TRAITEMENT DE GROUPE DE RESSOURCES, DISPOSITIF ET SUPPORT DE STOCKAGE

(30) Priority: 06.01.2017 CN 201710011436
(43) Date of publication of application: 14.06.2023
(62) Divisional of application: 17890817.4
(73) Proprietor: ZTE Corporation, Shenzhen, Guangdong Province 518057 (CN)
(72) Inventor: LU, Zhaohua, SHENZHEN, 518057 (CN); CHEN, Yijian, SHENZHEN, 518057 (CN); LI, Yu Ngok, SHENZHEN, 518057 (CN); WU, Hao, SHENZHEN, 518057 (CN)
(74) Representative: Regimbeau

(56) References cited:
- EP-A1- 2 840 748
- WO-A1-2015/143170
- WO-A1-2016/021929
- WO-A1-2016/060482
- FUJITSU: "Further analysis on control signal and Scheduling Assignment for D2D communication", vol. RAN WG1, no. Shenzhen, China; 20140331 - 20140404, 30 March 2014 (2014-03-30), XP050786904, Retrieved from the Internet <URL:http://www.3gpp.org/ftp/Meetings_3GPP_SYNC/RAN1/Docs/> [retrieved on 20140330]
- SAMSUNG: "Sensing and resource selection for collision avoidance", vol. RAN WG1, no. Busan, Korea; 20160411 - 20160415, 2 April 2016 (2016-04-02), XP051080341, Retrieved from the Internet <URL:http://www.3gpp.org/ftp/tsg_ran/WG1_RL1/TSGR1_84b/Docs/> [retrieved on 20160402]
- NOKIA ET AL: "On resource pool design", vol. RAN WG1, no. Busan, Korea; 20160411 - 20160415, 1 April 2016 (2016-04-01), XP051079826, Retrieved from the Internet <URL:http://www.3gpp.org/ftp/tsg_ran/WG1_RL1/TSGR1_84b/Docs/> [retrieved on 20160401]
- MEDIATEK INC: "On 2-stage Downlink Control Information for NR", vol. RAN WG1, no. Reno, USA; 20161114 - 20161118, 13 November 2016 (2016-11-13), XP051176076, Retrieved from the Internet <URL:http://www.3gpp.org/ftp/Meetings_3GPP_SYNC/RAN1/Docs/> [retrieved on 20161113]

## Description

### TECHNICAL FIELD

The present invention relates to the field of communications and, in particular, relates to a resource pool processing method and apparatus, a device and a storage medium.

### BACKGROUND

The fifth generation (5G) mobile networks will meet diverse service requirements of people in various fields such as living, working, leisure and traffic. Even in scenarios with ultra-high traffic density, ultra-high connection density and an ultra-high mobility characteristic, such as dense residential area, office, stadium, outdoor gathering, subway, express way, high-speed rail and wide-area coverage, the 5G mobile networks may also provide a user with extreme service experience such as ultra-high definition video, virtual reality, augmented reality, cloud desktop and online game. At the same time, the 5G mobile networks will also penetrate into Internet of Things (IoT) and various industries, and deeply integrate with industrial facilities, medical instruments and vehicles. This effectively meets diverse service requirements of vertical industries such as industry, medical treatment and traffic, and truly implements "Internet of everything".

In design of 5G system, forward compatibility is an important principle. This principle requires all resources to be dynamically configured. For example, a Synchronization Channel (SCH), a Channel State Information-Reference Signal (CSI-RS), a Sounding Reference Signal (SRS) and a feedback channel are configured to be dynamic and aperiodic. However, the better the forward compatibility is, the more the control overhead is. This will lead to reduction of spectral efficiency of the system. Due to the scarcity of radio spectrum resources, the design of a wireless communication system without consideration of the control overhead is certainly unreasonable.

Hence, it is required to strike a compromise between the control overhead and the forward compatibility. For example, a common resource pool is configured for transmitting the SCH, the CSI-RS, the SRS, the feedback channel or a transmission resource for a particular service (such as a low-delay high-reliability service). The system uses a resource in the resource pool according to requirements. However, if some resources in the resource pool are not used, there is no existing effective mechanism for allocating these unused resources to other downlink or uplink data channels that require resources (rate matching).

No effective solution has been proposed to solve the problem of poor usage flexibility of the resource pool of the 5G system in the existing art.

FUJITSU: "Further analysis on control signal and Scheduling Assignment for D2D communication" relates to using the scheduling assignment as a control signal for the D2D data transmission. SAMSUNG: "Sensing and resource selection for collision avoidance" discloses sensing to minimize collisions and the selection process for transmission after sensing is performed. NOKIA ET AL: "On resource pool design" discloses resource pool configurations to meet the latency requirement. MEDIATEK INC: "On 2-stage Downlink Control Information for NR" discloses the design for the DL data scheduling information, UL data scheduling information, and timing relationship information by a downlink control channel.

### SUMMARY

The embodiments of the present invention provide a resource pool processing method and apparatus, a device and a storage medium, to at least solve the problem of poor usage flexibility of a resource pool of a 5G generation mobile communication system in the existing art.

The present invention is set out in the appended set of claims.

Through the present invention, the state information of the resource pool is generated. The state information is identified by X bits. X is an integer greater than or equal to 1, and the value of X is determined through the negotiation between the first communication node and the second communication node, or determined through the pre-configuration. Then the state information is sent. That is, the present invention implements sending of the state information of the resource pool to the second communication node, to enable the second communication node to determine the resource used for data transmission according to received state information. This effectively utilizes a part of the unused resources in the resource pool, and solves the problem of poor usage flexibility of the resource pool of the 5G system in the existing art. The effect of increasing the usage flexibility of the resource pool is achieved.

### DESCRIPTION OF DRAWINGS

The drawings described herein are used for providing a further understanding of the present invention and form a part of the application. The exemplary embodiments of the present invention and their description are used for interpreting the present invention and do not constitute improper limitations to the present invention. Among the drawings:
FIG. 1 is a flowchart of a resource pool processing method according to an embodiment of the present invention;
FIG. 2 is a first schematic diagram of a sending manner of usage information of a resource pool according to an embodiment of the present invention;
FIG. 3 is a second schematic diagram of a sending manner of usage information of a resource pool according to an embodiment of the present invention;
FIG. 4 is a third schematic diagram of a sending manner of usage information of a resource pool according to an embodiment of the present invention;
FIG. 5 is a forth schematic diagram of a sending manner of usage information of a resource pool according to an embodiment of the present invention;
FIG. 6 is a fifth schematic diagram of a sending manner of usage information of a resource pool according to an embodiment of the present invention;
FIG. 7 is a sixth schematic diagram of a sending manner of usage information of a resource pool according to an embodiment of the present invention;
FIG. 8 is a seventh schematic diagram of a sending manner of usage information of a resource pool according to an embodiment of the present invention;
FIG. 9 is a structural diagram of a resource pool processing apparatus according to an embodiment of the present invention;
FIG. 10 is a first structural diagram of a resource pool processing apparatus according to an embodiment of the present invention;
FIG. 11 is a second structural diagram of a resource pool processing apparatus according to an embodiment of the present invention;
FIG. 12 is a third structural diagram of a resource pool processing apparatus according to an embodiment of the present invention;
FIG. 13 is a flowchart of another resource pool processing method according to an example; and
FIG. 14 is a fourth structural diagram of a resource pool processing apparatus according to an example.

### DETAILED DESCRIPTION

The present invention will be described in detail in conjunction with the drawings and embodiments. It should be noted that the embodiments of the present invention and features of the embodiments may be arbitrarily combined with each other in case of no conflict.

It should be noted that the terms "first", "second" and so on in the specification, the claims and the above drawings of the present invention are used for distinguishing similar objects, rather than for describing a specific order or a sequence.

### Embodiment 1:

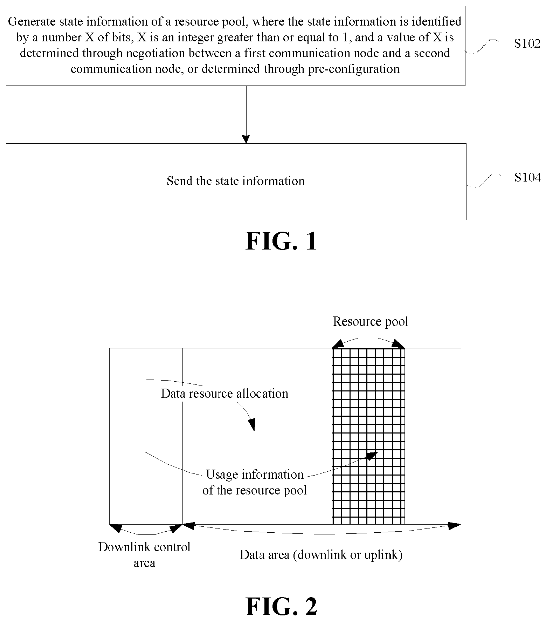

In this embodiment, a resource pool processing method is provided. FIG. 1 is a flowchart of the resource pool processing method according to the embodiment of the present invention. As shown in FIG. 1, the method includes steps described below.

In S102, state information of a resource pool is generated.

Optionally, the state information is used for describing usage information of the resource pool, such as used resources in the resource pool and unused resources in the resource pool.

It should be noted that the state information is identified by a number X of bits. X is an integer greater than or equal to 1, and the value of X is determined through negotiation between a first communication node and a second communication node.

The first communication node includes, but is not limited to, a base station. The second communication node includes, but is not limited to, a terminal.

In S104, the state information is sent.

Optionally, in the embodiment, an application scenario of the above resource pool processing method includes, but is not limited to, the design of 5G system. In this application scenario, the state information of the resource pool is generated. The state information is identified by the X bits. X is an integer greater than or equal to 1, and the value of X is determined through the negotiation between the first communication node and the second communication node, or determined through the pre-configuration. Then the state information is sent. That is, the present invention implements sending of the state information of the resource pool to the second communication node, to enable the second communication node to determine a resource used for data transmission according to received state information. This effectively utilizes a part of the unused resources in the resource pool, and solves a problem of poor usage flexibility of a resource pool of a 5G system in the existing art. An effect of increasing the usage flexibility of the resource pool is achieved.

Specific examples will be presented hereinafter to describe the embodiment.

A network-side equipment (including the base station) generates the usage information of the resource pool. Preferably, the usage information of the resource pool includes X bits. X is an integer greater than or equal to 1, and the value of X is determined through negotiation between the base station and the terminal. This is advantageous to increase flexibility of signaling and better meet a design requirement of "forward compatibility" of the 5G system.

The base station sends the usage information of the resource pool to the terminal.

In an optional implementation, before the step in which the state information is sent, the method further includes a following step: a sending manner of the state information is configured. Through the above method, the flexibility of signaling is increased and the design requirement of "forward compatibility" of the 5G system is better met.

The network-side equipment (including the base station) generates the usage information of the resource pool. Preferably, the usage information of the resource pool includes X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

The base station sends the usage information of the resource pool to the terminal. Preferably, a sending manner of the usage information of the resource pool is configured to the terminal by the base station. In this way, the base station may select an appropriate sending manner, such as sending the usage information of the resource pool through a high-level signaling or a physical layer signaling, according to load of the system and capacity of the terminal.

The sending manner of the state information includes, but is not limited to, any one of manners described below.

The state information is sent through a physical downlink control channel (PDCCH). The state information is sent through a channel or signal on a resource in the resource pool. The state information is sent through a resource in a time slot of the PDCCH corresponding to a data channel affected by usage of the resource pool. The state information is sent through a resource in a time slot after the time slot of the PDCCH corresponding to the data channel affected by the usage of the resource pool. The state information is sent through a resource in a time slot of the data channel affected by the usage of the resource pool. The state information is sent through a resource in a time slot after the time slot of the data channel affected by the usage of the resource pool.

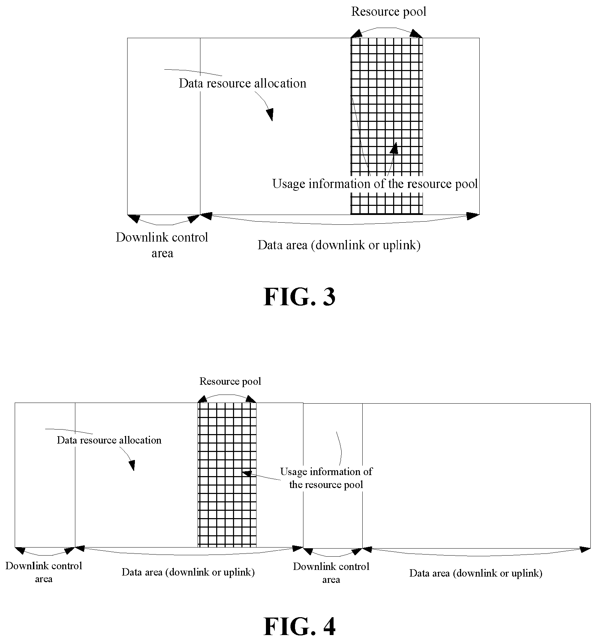

The base station sends the usage information of the resource pool to the terminal. Preferably, as shown in FIG. 2, the usage information of the resource pool is sent through the PDCCH, which may meet a requirement on real-time capability of signaling transmission. As shown in FIG. 3, the usage information of the resource pool is sent through the channel or signal on the resource in the resource pool. This design has a minimal impact on other channels, optimal forward compatibility and high flexibility. As shown in FIG. 2, the usage information of the resource pool is transmitted through the resource in the time slot of the PDCCH corresponding to the data channel affected by the usage of the resource pool. This is advantageous to enable the terminal to quickly acquire the impact of the resource in the resource pool on the resource used by the data channel. The usage information of the resource pool is transmitted through the resource in the time slot after the time slot of the PDCCH corresponding to the data channel affected by the usage of the resource pool. This is advantageous to have less impact on the data channel. As shown in FIG. 4, the usage information of the resource pool is transmitted through the resource in the time slot of the data channel affected by the usage of the resource pool. This may enable the terminal to quickly acquire the resource affected by the data channel. The usage information of the resource pool is transmitted through the resource in the time slot after the time slot of the data channel affected by the usage of the resource pool. This has a minimal impact on channel design.

Optionally, when the state information is sent through the PDCCH, the method further includes a following step: the state information is sent through a number N of PDCCHs. N is an integer greater than or equal to 2.

In an optional implementation, the sending manner of the state information includes, but is not limited to, a sending manner determined through feedback information from the second communication node.

In an optional implementation, the sending manner of the state information includes, but is not limited to, one of following manners: if the PDCCH exists in a time-domain resource corresponding to the resource pool, the state information is sent through a resource on a symbol of the PDCCH; the state information is sent through a resource on a symbol after a symbol of the PDCCH.

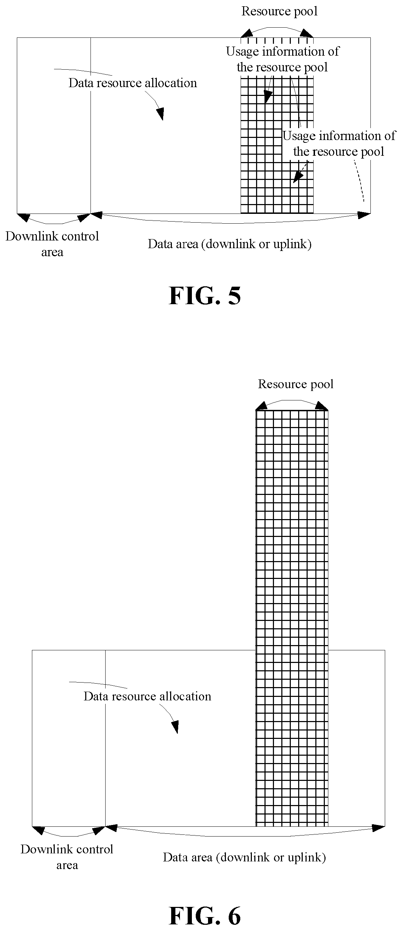

The base station sends the usage information of the resource pool to the terminal. Preferably, as shown in FIG. 5, if the PDCCH (such as a downlink control channel for a low-delay high-reliability service) exists in time-domain resources corresponding to the resource pool, the usage information of the resource pool is transmitted through the resource on the symbol of the PDCCH, or through the resource on the symbol after the symbol of the PDCCH. Preferably, the symbol may be an Orthogonal Frequency Division Multiplexing (OFDM) symbol.

Optionally, the above state information describes resource usage of a partial resource collection in the resource pool.

The network-side equipment (including the base station) generates the usage information of the resource pool. Preferably, the usage information of the resource pool describes the resource usage of the partial resource collection in the resource pool. As shown in FIG. 6, the resource pool includes ten basic resource units. The first four basic resource units of the ten basic resource units overlap with a resource used for the base station for sending data to the terminal, so the usage information of the resource pool only describes the usage of the first four basic resource units.

The base station sends the usage information of the resource pool to the terminal.

Optionally, the above state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

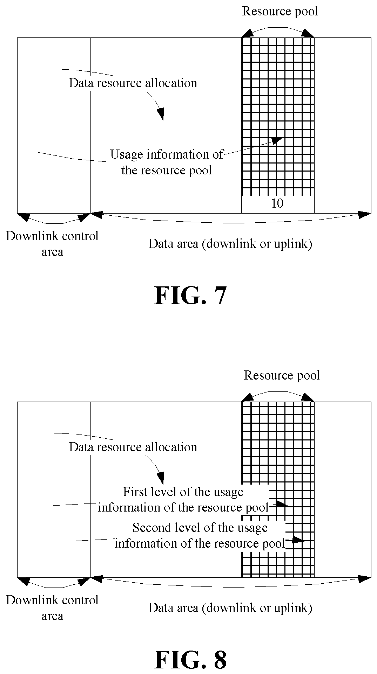

The network-side equipment (including the base station) generates the usage information of the resource pool. Preferably, the usage information of the resource pool describes whether the terminal receives data through the resource in the resource pool. As shown in FIG. 7, the resource pool includes ten basic resource units. The terminal may receive or send data through a basic resource unit labeled 10.

The base station sends the usage information of the resource pool to the terminal.

Optionally, the state information includes a number M of levels of usage state information. M is an integer greater than or equal to 2.

Optionally, at least one of the M levels of usage state information is sent in at least one of following manners: a PCDDH for broadcast, a PCDDH for multicast and a high-level signaling. The network-side equipment (including the base station) generates the usage information of the resource pool. Preferably, the usage information of the resource pool includes a number N of levels of the usage information. N is an integer greater than or equal to 2. As shown in FIG. 8, the resource pool includes ten basic resource units. The usage information of the resource pool is divided into two levels of the usage information. The first level of the usage information describes a location of usable basic resource units for the terminal (or a location of unusable basic resource units for the terminal) in the ten basic resource units. The second level of the usage information further describes usable resources in the basic resource units usable in the first level of the usage information. For example, the usable basic resource units include twelve subcarriers, and the terminal is informed which of the twelve subcarriers may be used for the terminal through the second level of the usage information. The base station sends the usage information of the resource pool to the terminal.

Optionally, mapping exists between a modulation coding scheme used for a channel for sending the state information and a modulation coding scheme of a data channel affected by the resource pool.

The network-side equipment (including the base station) generates the usage information of the resource pool.

The base station sends the usage information of the resource pool to the terminal. Preferably, mapping exists between a modulation coding scheme used for the usage information of the resource pool and the modulation coding scheme of the data channel affected by the resource pool. For example, a modulation scheme used for the base station for sending downlink data to the terminal is 64 Quadrature Amplitude Modulation (64-QAM) and a resource used for the downlink data is affected by the resource in the resource pool, so that the modulation scheme of 64-QAM or 16-QAM is used for the usage information of the resource pool.

Optionally, a beam used for a channel for sending the state information is the same as a beam used for a data channel affected by the resource pool.

The base station sends the usage information of the resource pool to the terminal. Preferably, a sending beam used for the usage information of the resource pool is the same as a sending beam used for the data channel affected by the resource pool.

Optionally, the network-side equipment (including the base station) generates the usage information of the resource pool.

The base station sends the usage information of the resource pool to the terminal. Preferably, a receiving beam used for the usage information of the resource pool is the same as a receiving beam used for the data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1. The A levels of signaling includes at least one of a high-level signaling and a MAC signaling.

Optionally, if A is greater than 1, dependency exists among the A levels of signaling. The dependency is used for indicating a relation between a resource pool configured through a first signaling in the A levels of signaling and a resource pool configured through a second signaling in the A levels of signaling.

Compared with the existing art, the method and apparatus (system) described in the present invention solves the problem of poor usage flexibility of the resource pool of the 5G system, significantly increases usage efficiency of air interface resources and enhances performance of the 5G system.

Through the description of the above implementations, those skilled in the art may clearly understand that the method of the above embodiment may be implemented by means of software plus a necessary general hardware platform, or hardware of course; but in many cases, the former is a better implementation. Based on this understanding, the technical solution of the present invention may be embodied in a form of a software product in essence, or a part of the technical solution that contributes to the existing art may be embodied in a form of a software product. The computer software product is stored in a storage medium (such as a Read-Only Memory (ROM), a Random Access Memory (RAM), a magnetic disc or a compact disc). The computer software product includes several instructions for causing a terminal equipment (which may be a cellphone, a computer, a server, a network equipment, etc.) to execute the methods described in each embodiment of the present invention.

### Embodiment 2:

In this embodiment, a resource pool processing apparatus is further provided. The apparatus is used for implementing the above embodiment and preferable implementations. What has been described will not be repeated. As used below, the term "module" may be a combination of software and/or hardware for implementing a predefined function. Although the apparatus described in the following embodiment is preferably implemented by software, it is also possible be conceived that the apparatus described in the following embodiment is implemented by hardware, or a combination of software and hardware.

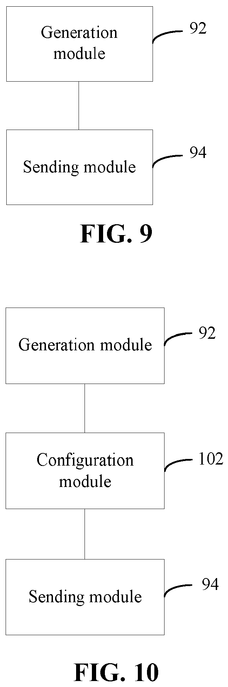

FIG. 9 is a structural diagram of the resource pool processing apparatus according to an embodiment of the present invention. As shown in FIG. 9, the apparatus includes a generation module 92 and a sending module 94.

The generation module 92 is configured to generate state information of a resource pool. The state information is identified by a number X of bits. X is an integer greater than or equal to 1, and the value of X is determined through negotiation between the first communication node and a second communication node.

The sending module 94 is configured to send the state information.

Optionally, in the embodiment, an application scenario of the above resource pool processing apparatus includes, but is not limited to, the 5G system design. In this application scenario, the state information of the resource pool is generated. The state information is identified by the X bits. X is an integer greater than or equal to 1, and the value of X is determined through the negotiation between the first communication node and the second communication node, or determined through the pre-configuration. Then the state information is sent. That is, the embodiment of the present invention implements sending of the state information of the resource pool to the second communication node, to enable the second communication node to determine a resource used for data transmission according to received state information. This effectively utilizes a part of unused resources in the resource pool, and solves a problem of poor usage flexibility of a resource pool of a 5G system in the existing art. An effect of increasing the usage flexibility of the resource pool is achieved.

FIG. 10 is a first structural diagram of the resource pool processing apparatus according to an embodiment of the present invention. As shown in FIG. 10, the apparatus includes a configuration module 102 in addition to the modules shown in FIG. 9.

The configuration module 102 is configured to configure a sending manner of the state information before the state information is sent.

Through the apparatus shown in FIG. 10, the flexibility of signaling may be increased and a design requirement of "forward compatibility" of the 5G system may be better met.

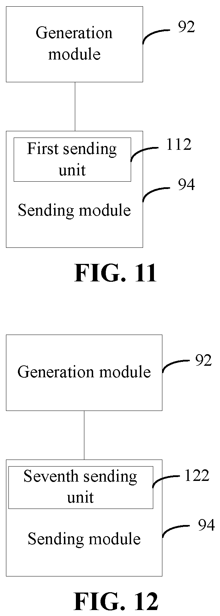

FIG. 11 is a second structural diagram of the resource pool processing apparatus according to the embodiment of the present invention. As shown in FIG. 11, the sending module 94 includes a first sending unit 112.

The first sending unit 112 is configured to send the state information through a physical downlink control channel (PDCCH).

Alternatively, the first sending unit 112 is equivalently substituted for a second sending unit, a third sending unit, a fourth sending unit, a fifth sending unit or a sixth sending unit. The second sending unit is configured to send the state information through a channel or signal on a resource in the resource pool. The third sending unit is configured to send the state information through a resource in a time slot of the PDCCH corresponding to a data channel affected by usage of the resource pool. The forth sending unit is configured to send the state information through a resource in a time slot after the time slot of the PDCCH corresponding to the data channel affected by the usage of the resource pool. The fifth sending unit is configured to send the state information through a resource in a time slot of the data channel affected by the usage of the resource pool. The sixth sending unit is configured to send the state information through a resource in a time slot after the time slot of the data channel affected by the usage of the resource pool.

Optionally, the first sending unit 112 is further configured to send the state information through a number N of PDCCHs. N is an integer greater than or equal to 2.

Optionally, the sending module 94 is further configured to determine a sending manner of the state information according to feedback information from the second communication node.

FIG. 12 is a third structural diagram of the resource pool processing apparatus according to an embodiment of the present invention. As shown in FIG. 12, the sending module 94 includes a seventh sending unit 122.

The seventh sending unit 122 is configured to, if a PDCCH exists in a time-domain resource corresponding to the resource pool, send the state information through a resource on a symbol of the PDCCH.

Alternatively, the seventh sending unit 122 is equivalently substituted for an eighth sending unit. The eighth sending unit is configured to send the state information through a resource on a symbol after the symbol of the PDCCH.

It should be noted that the above modules may be implemented by software or hardware. For the latter, the above modules may be implemented, but not limited to, by one of following manners: the above modules are all located in the same processor or located in separate processors in a form of arbitrary combinations.

The example 3 in the following description is not according to the present invention and is presented for illustration purposes only.

### Example 3:

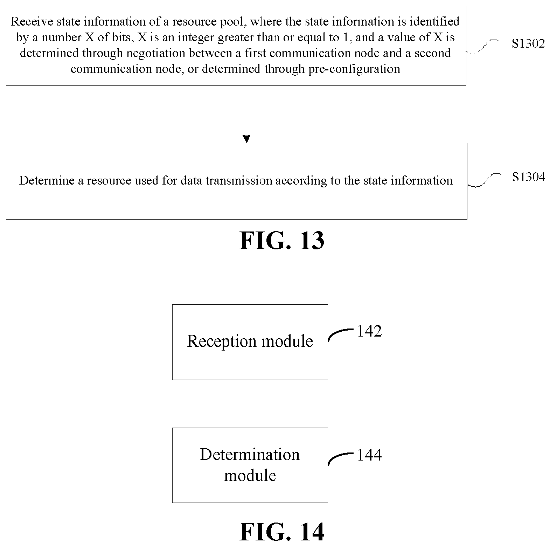

In this example, a resource pool processing method is provided. FIG. 13 is a flowchart of another resource pool processing method according to an example. As shown in FIG. 13, the method includes steps described below.

In S1302, state information of a resource pool is received.

Optionally, the state information is used for describing usage information of the resource pool, such as used resources in the resource pool and unused resources in the resource pool.

It should be noted that the above state information is identified by a number X of bits. X is an integer greater than or equal to 1, and the value of X is determined through negotiation between a first communication node and a second communication node, or determined through pre-configuration.

The first communication node includes, but is not limited to, a base station. The second communication node includes, but is not limited to, a terminal.

In S1304, a resource used for data transmission is determined according to the state information. Optionally, an application scenario of the above resource pool processing method includes, but is not limited to, the 5G system design. In this application scenario, the state information of the resource pool is received. The state information is identified by the X bits. X is an integer greater than or equal to 1, and the value of X is determined through the negotiation between the first communication node and the second communication node.

The resource used for the data transmission is determined according to the state information. That is, the example implements sending of the state information of the resource pool to the second communication node, to enable the second communication node to determine the resource used for data transmission according to received state information. This effectively utilizes a part of the unused resources in the resource pool, and solves a problem of poor usage flexibility of a resource pool of a 5G system in the existing art. An effect of increasing the usage flexibility of the resource pool is achieved.

In an optional implementation, the state information describes resource usage of a partial resource collection in the resource pool.

Optionally, the state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information includes a number M of levels of usage state information. M is an integer greater than or equal to 2.

Optionally, mapping exists between a modulation coding scheme used for a channel for sending the state information and a modulation coding scheme of a data channel affected by the resource pool. A beam used for a channel for sending the state information is the same as a beam used for a data channel affected by the resource pool.

In an optional implementation, the resource pool is divided into a number Y of resource collections. Y is an integer greater than or equal to X. The resource pool is configured to the second communication node by the first communication node through a number A of levels of signaling. A is an integer greater than or equal to 1.

Optionally, the A levels of signaling includes at least one of a high-level signaling and a MAC signaling. If A is greater than 1, dependency exists among the A levels of signaling. The dependency is used for indicating a relation between a resource pool configured through a first signaling in the A levels of signaling and a resource pool configured through a second signaling in the A levels of signaling.

Different optional embodiments will be presented hereinafter to describe the embodiment in detail.

It should be noted that a main executor in the following optional embodiments is the terminal.

### Optional embodiment 1:

The terminal receives the usage information of the resource pool (through a physical layer signaling or a high-level signaling, such as a Radio Resource Control (RRC) signaling) from a network-side equipment (including the base station). Preferably, the usage information of the resource pool includes the X bits. X is an integer greater than or equal to 1, and the value of X is determined through negotiation between the base station and the terminal.

This is advantageous to increase flexibility of signaling and better meet a design requirement of "forward compatibility" of the 5G system.

The terminal determines a resource used for receiving downlink data or sending uplink data according to the usage information of the resource pool.

### Optional embodiment 2:

The terminal receives the usage information of the resource pool from the network-side equipment (including the base station). Preferably, the usage information of the resource pool includes the X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

### The terminal determines the resource used for receiving downlink data or sending uplink data according to the usage information of the resource pool.

Preferably, a sending manner of the usage information of the resource pool is configured to the terminal by the base station. In this way, the base station may select an appropriate sending manner, such as sending the usage information of the resource pool through a high-level signaling or a physical layer signaling, according to load of the system and capacity of the terminal.

### Optional embodiment 3:

The terminal receives the usage information of the resource pool from the network-side equipment (including the base station). Preferably, the usage information of the resource pool includes the X bits. X is an integer greater than or equal to 1, and the value of X is determined through the negotiation between the base station and the terminal.

This is advantageous to increase the flexibility of signaling and better meet the design requirement of "forward compatibility" of the 5G system.

The terminal determines the resource used for receiving downlink data or sending uplink data according to the usage information of the resource pool.

Preferably, as shown in FIG. 2, the usage information of the resource pool is sent through a physical downlink control channel (PDCCH), which may meet a requirement on real-time capability of signaling transmission. As shown in FIG. 3, the usage information of the resource pool is sent through a channel or signal on a resource in the resource pool. This design has a minimal impact on other channels, optimal forward compatibility and high flexibility. As shown in FIG. 2, the usage information of the resource pool is transmitted through a resource in a time slot of the PDCCH corresponding to a data channel affected by the usage of the resource pool. This is advantageous to enable the terminal to quickly acquire the impact of the resource in the resource pool on the resource used by the data channel. The usage information of the resource pool is transmitted through a resource in a time slot after a time slot of the PDCCH corresponding to the data channel affected by the usage of the resource pool. This is advantageous to have less impact on the data channel. As shown in FIG. 4, the usage information of the resource pool is transmitted through a resource in a time slot of the PDCCH corresponding to the data channel affected by the usage of the resource pool. This may enable the terminal to quickly acquire the resource affected by the data channel. The usage information of the resource pool is transmitted through a resource in a time slot after a time slot of the PDCCH corresponding to the data channel affected by the usage of the resource pool. This has a minimal impact on channel design.

### Optional embodiment 4:

The terminal receives the usage information of the resource pool from the network-side equipment (including the base station). Preferably, the usage information of the resource pool describes the resource usage of the partial resource collection in the resource pool. As shown in FIG. 6, the resource pool includes ten basic resource units. The first four basic resource units of the ten basic resource units overlap with a resource used for the base station for sending data to the terminal, so the usage information of the resource pool only describes the usage of the first four basic resource units.

The terminal determines the resource used for receiving downlink data or sending uplink data according to the usage information of the resource pool.

### Optional embodiment 5:

The terminal receives the usage information of the resource pool from the network-side equipment (including the base station). Preferably, the usage information of the resource pool describes whether the terminal receives data through the resource in the resource pool. As shown in FIG. 7, the resource pool includes ten basic resource units. The terminal may receive or send data through a basic resource unit labeled 10.

The terminal determines the resource used for receiving downlink data or sending uplink data according to the usage information of the resource pool.

### Optional embodiment 6:

The terminal receives the usage information of the resource pool from the network-side equipment (including the base station). Preferably, the usage information of the resource pool includes a number N of levels of the usage information. N is an integer greater than or equal to 2. As shown in FIG. 8, the resource pool includes ten basic resource units. The usage information of the resource pool is divided into two levels of the usage information. The first level of the usage information describes a location of usable basic resource units for the terminal (or a location of unusable basic resource units for the terminal) in the ten basic resource units. The second level of the usage information further describes usable resources in the basic resource units usable in the first level of the usage information. For example, the usable basic resource units include twelve subcarriers, and the terminal is informed which of the twelve subcarriers may be used for the terminal through the second level of the usage information.

The terminal determines the resource used for receiving downlink data or sending uplink data according to the usage information of the resource pool.

### Optional embodiment 7:

The terminal receives the usage information of the resource pool from the network-side equipment (including the base station). Preferably, the usage information of the resource pool includes the N levels of the usage information. N is an integer greater than or equal to 2. At least one of the N levels of usage state information is sent through a PCDDH for broadcast, a PCDDH for multicast or a high-level signaling.

The terminal determines the resource used for receiving downlink data or sending uplink data according to the usage information of the resource pool.

### Optional embodiment 8:

The terminal receives the usage information of the resource pool from the network-side equipment (including the base station).

The terminal determines the resource used for receiving downlink data or sending uplink data according to the usage information of the resource pool.

Preferably, the state information of the resource pool is sent through a number N of PDCCHs. N is an integer greater than or equal to 1.

### Optional embodiment 9:

The terminal receives the usage information of the resource pool from the network-side equipment (including the base station).

Preferably, the resource pool is divided into a number Y of resource collections. Y is an integer greater than or equal to X.

The terminal determines the resource used for receiving downlink data or sending uplink data according to the usage information of the resource pool.

### Optional embodiment 10:

The terminal receives the usage information of the resource pool from the network-side equipment (including the base station).

The terminal determines the resource used for receiving downlink data or sending uplink data according to the usage information of the resource pool.

Preferably, as shown in FIG. 5, if the PDCCH (such as a downlink control channel for a low-delay high-reliability service) exists in time-domain resources corresponding to the resource pool, the usage information of the resource pool is transmitted through a resource on a symbol of the PDCCH, or through a resource on a symbol after a symbol of the PDCCH. Preferably, the symbol may be an Orthogonal Frequency Division Multiplexing (OFDM) symbol.

### Optional embodiment 11:

The terminal receives the usage information of the resource pool from the network-side equipment (including the base station).

The terminal determines the resource used for receiving downlink data or sending uplink data according to the usage information of the resource pool.

Preferably, mapping exists between a modulation coding scheme used for the usage information of the resource pool and the modulation coding scheme of the data channel affected by the resource pool. For example, a modulation scheme used for the base station for sending downlink data to the terminal is 64-QAM and a resource used for the downlink data is affected by the resource in the resource pool, so that the modulation scheme of 64-QAM or 16-QAM is used for the usage information of the resource pool.

### Optional embodiment 12:

The terminal receives the usage information of the resource pool from the network-side equipment (including the base station).

The terminal determines the resource used for receiving downlink data or sending uplink data according to the usage information of the resource pool.

Preferably, a sending beam used for the state information of the resource pool is the same as a sending beam used for the data channel affected by the resource pool.

### Optional embodiment 13:

The terminal receives the usage information of the resource pool from the network-side equipment (including the base station).

The terminal determines the resource used for receiving downlink data or sending uplink data according to the usage information of the resource pool.

Preferably, a receiving beam used for the state information of the resource pool is the same as a receiving beam used for the data channel affected by the resource pool.

### Optional embodiment 14:

The terminal receives the usage information of the resource pool from the network-side equipment (including the base station).

The terminal determines the resource used for receiving downlink data or sending uplink data according to the usage information of the resource pool.

Preferably, the sending manner of the usage information of the resource pool is notified by the terminal to the base station through feedback information.

Compared with the existing art, the method and apparatus (system) described in the present invention solves the problem of poor flexibility of the resource pool of the 5G system, significantly increases usage efficiency of air interface resources and enhances performance of the 5G system.

It should be noted that the receiving beam mentioned in the present invention includes at least one of a receiving port, a receiving resource, a reference signal sequence, a receiving pre-coding matrix (analog, digital and a mixed mode), a receiver algorithm and Quasi-Co-Location (QCL) information.

It should be noted that the sending beam mentioned in the present invention includes at least one of a sending port, a sending resource, a reference signal sequence, a sending pre-coding matrix (analog, digital and a mixed mode), a transmitter algorithm and QCL information.

It should be noted that the beam may be a resource (such as transmitter pre-coding, receiver pre-coding, an antenna port, an antenna weight vector and an antenna weight matrix). The sequence number of the beam may be replaced by a resource index, because the beam may be bound with some time-frequency code resources in transmission. The beam may also be a transmission (sending or reception) mode. The transmission mode may include Space Division Multiplexing (SDM), frequency/time domain diversity. The receiving beam refers to a beam of the receiver that does not need to be indicated, or a beam resource of the receiver indicated by the transmitter through the current reference signal and reference signals (or standard reference signals) reported by the antenna port and a user equipment (UE), and indicated by QCL of the antenna port.

Through the description of the above implementations, those skilled in the art may clearly understand that the method of the above embodiment may be implemented by means of software plus a necessary general hardware platform, or hardware of course; but in many cases, the former is a better implementation. Based on this understanding, the technical solution of the present invention may be embodied in a form of a software product in essence, or a part of the technical solution that contributes to the existing art may be embodied in a form of a software product. The computer software product is stored in a storage medium (such as a Read-Only Memory (ROM), a Random Access Memory (RAM), a magnetic disc or a compact disc). The computer software product includes several instructions for causing a terminal equipment (which may be a cellphone, a computer, a server, a network equipment, etc.) to execute the methods described in each embodiment of the present invention.

The example 4 in the following description is not according to the present application and is presented for illustration purposes only.

### Example 4:

In this example, a resource pool processing apparatus is further provided. The apparatus is used for implementing the above embodiments and preferable implementations. What has been described will not be repeated. As used below, the term "module" may implement a combination of preset functional software and/or hardware. Although the apparatus described in the following example is preferably implemented by software, it is also possible be conceived that the apparatus described in the following example is the implemented by hardware, or a combination of software and hardware.

FIG. 14 is a forth structural diagram of the resource pool processing apparatus according to an example. As shown in FIG. 14, the apparatus includes a reception module 142 and a determination module 144.

The reception module 142 is configured to receive state information of a resource pool. The state information is identified by a number X of bits. X is an integer greater than or equal to 1, and the value of X is determined through negotiation between a first communication node and the second communication node, or determined through pre-configuration.

The determination module 144 is configured to determine a resource used for data transmission according to the state information.

Optionally, the state information is used for describing usage information of the resource pool, such as used resources in the resource pool and unused resources in the resource pool.

The first communication node includes, but is not limited to, a base station. The second communication node includes, but is not limited to, a terminal.

Optionally, an application scenario of the above resource pool processing apparatus includes, but is not limited to, the 5G system design. In this application scenario, the state information of the resource pool is received. The state information is identified by the X bits. X is an integer greater than or equal to 1, and the value of X is determined through the negotiation between the first communication node and the second communication node.

The resource used for the data transmission according to the state information is determined. That is, the example implements sending of the state information of the resource pool to the second communication node, to enable the second communication node to determine the resource used for data transmission according to received state information. This effectively utilizes a part of the unused resources in the resource pool, and solves the problem of poor usage flexibility of the resource pool of a 5G system in the existing art. An effect of increasing the usage flexibility of the resource pool is achieved.

In an optional implementation, the state information describes resource usage of a partial resource collection in the resource pool.

In an another optional implementation, the state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information includes a number M of levels of usage state information. M is an integer greater than or equal to 2.

Optionally, mapping exists between a modulation coding scheme used for a channel for sending the state information and a modulation coding scheme of a data channel affected by the resource pool.

Optionally, a beam used for a channel for sending the state information is the same as a beam used for a data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1. The A levels of signaling includes at least one of a high-level signaling and a MAC signaling. If A is greater than 1, dependency exists among the A levels of signaling. The dependency is used for indicating a relation between a resource pool configured through a first signaling in the A levels of signaling and a resource pool configured through a second signaling in the A levels of signaling.

It should be noted that the above modules may be implemented by software or hardware. For the latter, the above modules may be implemented, but not limited to, by one of following manners: the above modules are all located in the same processor or located in separate processors in a form of arbitrary combinations.

### Embodiment 5:

The present invention further provides a storage medium. Optionally, in this embodiment, the storage medium may be configured to store program codes used for performing steps described below.

In S1, state information of a resource pool is generated. The state information is identified by a number X of bits. X is an integer greater than or equal to 1, and the value of X is determined through negotiation between a first communication node and a second communication node, or determined through pre-configuration.

In S2, the state information is sent.

Optionally, the storage medium is further configured to store program codes used for performing steps described below.

In S3, the state information of the resource pool is received. The state information is identified by the X bits. X is an integer greater than or equal to 1, and the value of X is determined through the negotiation between the first communication node and the second communication node.

In S4, a resource used for data transmission is determined according to the state information. Optionally, in the embodiment, the above storage medium may include, but is not limited to, various media that may store the program codes, such as a universal serial bus (USB) flash disk, a Read-Only Memory (ROM), a Random Access Memory (RAM), a mobile hard disk, a magnetic disc or a compact disc.

Optionally, in the embodiment, a processor executes the above steps S1 and S2 according to stored program codes in the storage medium.

Optionally, in the embodiment, the processor executes the above steps S3 and S4 according to the stored program codes in the storage medium.

Optionally, specific examples of the embodiment may refer to the examples described in the above embodiments and the optional implementations, which will not be repeated here.

Obviously, those skilled in the art should understand that the modules or steps of the above embodiments of the present invention may be implemented by a common computing device. The modules or steps may be concentrated on a single computing device or distributed on a network composed of multiple computing devices. Optionally, the modules or steps may be implemented by executable program codes of the computing device, so that they may be stored in a storage device and be executed by the computing device. Moreover, in some cases, the steps shown or described may be executed in a different order than here. The modules or steps may be implemented by fabricating them into respective integrated circuits, or by implementing multiple modules or steps into a single integrated circuit module. In this way, the present invention is not limited to a combination of any particular hardware and software.

## Claims

1. A resource pool processing method, the method being applied to a first wireless communication node and **characterized by** comprising:
generating (S102) state information of a resource pool, wherein the state information is identified by a number X of bits, X is an integer greater than or equal to 1, and a value of X is determined through negotiation between the first wireless communication node and a second wireless communication node; and
sending (S104) the state information to the second wireless communication node;
wherein a sending manner of the state information comprises one of: sending the state information through a resource in a time slot of a physical downlink control channel, PDCCH, corresponding to a data channel affected by usage of the resource pool; sending the state information through a resource in a time slot after a time slot of a PDCCH corresponding to the data channel affected by usage of the resource pool; sending the state information through a resource in a time slot of a data channel affected by usage of the resource pool; or sending the state information through a resource in a time slot after a time slot of a data channel affected by usage of the resource pool.

2. The method of claim 1, wherein in a case of sending the state information through the PDCCH, the resource pool processing method further comprises:
sending the state information through a number N of PDCCHs, wherein N is an integer greater than or equal to 2.

3. The method of claim 1, wherein the sending manner of the state information comprises:
a sending manner determined through feedback information from the second communication node.

4. The method of claim 1, wherein the sending manner of the state information comprises:
in a case where a PDCCH exists in a time-domain resource corresponding to the resource pool, sending the state information through a resource on a symbol of the PDCCH; or
sending the state information through a resource on a symbol after a symbol of the PDCCH.

5. The method of claim 1, wherein
the state information describes resource usage of a partial resource collection in the resource pool.

6. The method of claim 1, wherein
the state information describes whether the first communication node sends data through a resource in the resource pool;
the state information describes whether the second communication node receives data through a resource in the resource pool;
the state information describes whether the second communication node tries to receive data through a resource in the resource pool; or
the state information describes whether the second communication node measures, through a resource in the resource pool, at least one of a channel, interference, a sending manner and a receiving manner.

7. The method of claim 1, wherein
the state information comprises a number M of levels of usage state information, wherein M is an integer greater than or equal to 2;
wherein at least one of the M levels of usage state information is sent in at least one manner of a group consisting of: a PCDDH for broadcast; a PCDDH for multicast; and high-level signaling.

8. The method of claim 1, wherein
mapping exists between a modulation coding scheme used for a channel for sending the state information and a modulation coding scheme of a data channel affected by the resource pool.

9. The method of claim 1, wherein
a beam used for a channel for sending the state information is the same as a beam used for a data channel affected by the resource pool.

10. The method of claim 1, wherein
the resource pool is divided into a number Y of resource collections, wherein Y is an integer greater than or equal to X.

11. The method of claim 1, wherein
the resource pool is configured to the second communication node by the first communication node through a number A of levels of signaling, wherein A is an integer greater than or equal to 1;
wherein the A levels of signaling comprises at least one of a group consisting of: high-level signaling; and Media Access Control, MAC, signaling;
wherein in a case where A is greater than 1, dependency exists among the A levels of signaling, wherein the dependency is used for indicating a relation between a resource pool configured through a first signaling in the A levels of signaling and a resource pool configured through a second signaling in the A levels of signaling.

12. A resource pool processing apparatus, within a first wireless communication node, **characterized by** comprising:
a generation module (92), which is configured to generate state information of a resource pool, wherein the state information is identified by a number X of bits, X is an integer greater than or equal to 1, and a value of X is determined through negotiation between the first wireless communication node and a second wireless communication node; and
a sending module (94), which is configured to send the state information to the second node;
wherein the sending module comprises one of: a third sending unit configured to send the state information through a resource in a time slot of a physical downlink control channel, PDCCH, corresponding to a data channel affected by usage of the resource pool; a fourth sending unit configured to send the state information through a resource in a time slot after a time slot of a PDCCH corresponding to a data channel affected by usage of the resource pool; a fifth sending unit configured to send the state information through a resource in a time slot of a data channel affected by usage of the resource pool; or a sixth sending unit configured to send the state information through a resource in a time slot after a time slot of a data channel affected by usage of the resource pool

13. A wireless communication device, comprising: a memory and one or more processors;
wherein the memory is configured to store one or more programs; and
when the one or more programs are executed by the one or more processors, so that the one or more processors implement the method of any one of claims 1-11.

14. A storage medium storing computer programs, wherein the computer programs, when executed by a processor of a wireless communications device, implement the method of any one of claims 1-11.

## Patentansprüche

1. Verfahren zum Verarbeiten eines Ressourcen-Pools, wobei das Verfahren auf einen ersten drahtlosen Kommunikationsknoten angewendet wird und **dadurch gekennzeichnet ist, dass** es umfasst:
Generieren (S102) von Zustandsinformationen eines Ressourcen-Pools, wobei die Zustandsinformationen durch eine Anzahl X von Bits identifiziert werden, wobei X eine Ganzzahl größer oder gleich 1 ist, und ein Wert von X durch eine Verhandlung zwischen dem ersten drahtlosen Kommunikationsknoten und einem zweiten drahtlosen Kommunikationsknoten bestimmt wird; und
Senden (S104) der Zustandsinformationen an den zweiten drahtlosen Kommunikationsknoten:
wobei die Art des Sendens der Zustandsinformationen eines umfasst von: Senden der Zustandsinformationen über eine Ressource in einem Zeitfenster eines physischen Downlink-Steuerkanals, PDCCH, der einem Datenkanal entspricht, der von der Nutzung des Ressourcen-Pools betroffen ist; Senden der Zustandsinformationen über eine Ressource in einem Zeitfenster nach einem Zeitfenster eines PDCCH, der dem Datenkanal entspricht, der von der Nutzung des Ressourcen-Pools betroffen ist; Senden der Zustandsinformationen über eine Ressource in einem Zeitfenster eines Datenkanals, der von der Nutzung des Ressourcen-Pools betroffen ist; oder Senden der Zustandsinformationen über eine Ressource in einem Zeitfenster nach einem Zeitfenster eines Datenkanals, der von der Nutzung des Ressourcen-Pools betroffen ist.

2. Verfahren nach Anspruch 1, wobei in einem Fall des Sendens der Zustandsinformationen über den PDCCH das Verfahren zum Verarbeiten eines Ressourcen-Pools ferner umfasst:
Senden der Zustandsinformationen über eine Anzahl N von PDCCHs, wobei N eine Ganzzahl größer oder gleich 2 ist.

3. Verfahren nach Anspruch 1, wobei die Art des Sendens der Zustandsinformationen umfasst:
eine Art des Sendens, die über Rückmeldungsinformationen von dem zweiten Kommunikationsknoten bestimmt wird.

4. Verfahren nach Anspruch 1, wobei die Art des Sendens der Zustandsinformationen umfasst:
in einem Fall, bei dem ein PDCCH in einer Zeitdomänenressource vorhanden ist, die dem Ressourcen-Pool entspricht, Senden der Zustandsinformationen über eine Ressource mit einem Symbol des PDCCH; oder
Senden der Zustandsinformationen über eine Ressource mit einem Symbol nach einem Symbol des PDCCH.

5. Verfahren nach Anspruch 1, wobei
die Zustandsinformationen die Ressourcennutzung einer Teilressourcensammlung in dem Ressourcen-Pool beschreiben.

6. Verfahren nach Anspruch 1, wobei
die Zustandsinformationen beschreiben, ob der erste Kommunikationsknoten Daten über eine Ressource in dem Ressourcen-Pool sendet;
die Zustandsinformationen beschreiben, ob der zweite Kommunikationsknoten Daten über eine Ressource in dem Ressourcen-Pool empfängt;
die Zustandsinformationen beschreiben, ob der zweite Kommunikationsknoten versucht, Daten über eine Ressource in dem Ressourcen-Pool zu empfangen; oder
die Zustandsinformationen beschreiben, ob der zweite Kommunikationsknoten über eine Ressource in dem Ressourcen-Pool mindestens eines von einem Kanal, einer Interferenz, einer Art des Sendens und einer Art des Empfangens misst.

7. Verfahren nach Anspruch 1, wobei
die Zustandsinformationen eine Anzahl M von Zustandsinformationen über Nutzungsebenen umfassen, wobei M eine Ganzzahl größer oder gleich 2 ist;
wobei mindestens eine der M Zustandsinformationen über Nutzungsebenen auf mindestens eine Art einer Gruppe gesendet wird, die besteht aus: einem PCDDH zur Rundsendung; einem PCDDH für Multicast; und einer höheren Signalisierung.

8. Verfahren nach Anspruch 1, wobei
eine Abbildung zwischen einem Modulationskodierungsplan, der für einen Kanal zum Senden der Zustandsinformationen verwendet wird, und einem Modulationskodierungsplan eines Datenkanals, der von dem Ressourcen-Pool betroffen ist, vorhanden ist.

9. Verfahren nach Anspruch 1, wobei
ein Strahl, der für einen Kanal zum Senden der Zustandsinformationen verwendet wird, der gleiche ist wie ein Strahl, der für einen Datenkanal, der von dem Ressourcen-Pool betroffen ist, verwendet wird.

10. Verfahren nach Anspruch 1, wobei
der Ressourcen-Pool in eine Anzahl von Y Ressourcensammlungen unterteilt ist, wobei Y eine Ganzzahl größer oder gleich X ist.

11. Verfahren nach Anspruch 1,
wobei der Ressourcen-Pool für den zweiten Kommunikationsknoten durch den ersten Kommunikationsknoten über eine Anzahl A von Signalisierungsebenen konfiguriert wird, wobei A eine Ganzzahl größer oder gleich 1 ist;
wobei die A Signalisierungsebenen mindestens eine einer Gruppe umfassen, die besteht aus: einer höheren Signalisierung; und einer Medienzugriffssteuerungs-, MAC, Signalisierung;
wobei in einem Fall, bei dem A größer als 1 ist, eine Abhängigkeit zwischen den A Signalisierungsebenen besteht,
wobei die Abhängigkeit verwendete wird, um eine Beziehung zwischen einem Ressourcen-Pool, der über eine erste Signalisierung in den A Signalisierungsebenen konfiguriert wird, und einem Ressourcen-Pool, der über eine zweite Signalisierung in den A Signalisierungsebenen konfiguriert wird.

12. Gerät zum Verarbeiten eines Ressourcen-Pools in einem ersten drahtlosen Kommunikationsknoten, **dadurch gekennzeichnet, dass** es umfasst:
ein Generierungsmodul (92), das dazu konfiguriert ist, Zustandsinformationen eines Ressourcen-Pools zu generieren, wobei die Zustandsinformationen durch eine Anzahl X von Bits identifiziert werden, wobei X eine Ganzzahl größer oder gleich 1 ist, und ein Wert von X durch eine Verhandlung zwischen dem ersten drahtlosen Kommunikationsknoten und einem zweiten drahtlosen Kommunikationsknoten bestimmt wird; und
ein Sendemodul (94), das dazu konfiguriert ist, die Zustandsinformationen an den zweiten Knoten zu senden;
wobei das Sendemodul eine umfasst von: einer dritten Sendeeinheit, die dazu konfiguriert ist, die Zustandsinformationen über eine Ressource in einem Zeitfenster eines physischen Downlink-Steuerkanals, PDCCH, zu senden, der einem Datenkanal entspricht, der von der Nutzung des Ressourcen-Pools betroffen ist; einer vierten Sendeeinheit, die dazu konfiguriert ist, die Zustandsinformationen über eine Ressource in einem Zeitfenster nach einem Zeitfenster eines PDCCH zu senden, der einem Datenkanal entspricht, der von der Nutzung des Ressourcen-Pools betroffen ist; einer fünften Sendeeinheit, die dazu konfiguriert ist, die Zustandsinformationen über eine Ressource in einem Zeitfenster eines Datenkanals zu senden, der von der Nutzung des Ressourcen-Pools betroffen ist; oder einer sechsten Sendeeinheit, die dazu konfiguriert ist, die Zustandsinformationen über eine Ressource in einem Zeitfenster nach einem Zeitfenster eines Datenkanals zu senden, der von der Nutzung des Ressourcen-Pools betroffen ist.

13. Drahtlose Kommunikationsvorrichtung, umfassend: einen Speicher und einen oder mehrere Prozessoren;
wobei der Speicher dazu konfiguriert ist, ein oder mehrere Programme zu speichern; und
wenn das eine oder die mehreren Programme von dem einen oder den mehreren Prozessoren ausgeführt werden, der eine oder die mehreren Prozessoren das Verfahren nach einem der Ansprüche 1 bis 11 umsetzen.

14. Speichermedium, das Computerprogramme speichert, wobei die Computerprogramme, wenn sie von einem Prozessor einer drahtlosen Kommunikationsvorrichtung ausgeführt werden, das Verfahren nach einem der Ansprüche 1 bis 11 umsetzen.

## Revendications

1. Procédé de traitement de groupe de ressources, le procédé étant appliqué à un premier nœud de communication sans fil et étant **caractérisé par le fait qu'**il comprend :
la génération (S102) d'informations d'état d'un groupe de ressources, dans lequel les informations d'état sont identifiées par un nombre X de bits, X est un nombre entier supérieur à ou égal à 1, et une valeur de X est déterminée par le biais d'une négociation entre le premier nœud de communication sans fil et un deuxième nœud de communication sans fil ; et
l'envoi (S104) des informations d'état au deuxième nœud de communication sans fil ;
dans lequel un mode d'envoi des informations d'état comprend l'un parmi : l'envoi des informations d'état par le biais d'une ressource dans un créneau temporel d'un canal de commande de liaison descendante physique, PDCCH, correspondant à un canal de données affecté par l'utilisation du groupe de ressources ; l'envoi des informations d'état par le biais d'une ressource dans un créneau temporel après un créneau temporel d'un PDCCH correspondant au canal de données affecté par l'utilisation du groupe de ressources ; l'envoi des informations d'état par le biais d'une ressource dans un créneau temporel d'un canal de données affecté par l'utilisation du groupe de ressources ; ou l'envoi des informations d'état par le biais d'une ressource dans un créneau temporel après un créneau temporel d'un canal de données affecté par l'utilisation du groupe de ressources.

2. Procédé selon la revendication 1, dans lequel dans un cas de l'envoi des informations d'état par le biais du PDCCH, le procédé de traitement de groupe de ressources comprend en outre :
l'envoi des informations d'état par le biais d'un nombre N de PDCCH, dans lequel N est un nombre entier supérieur à ou égal à 2.

3. Procédé selon la revendication 1, dans lequel le mode d'envoi des informations d'état comprend :
un mode d'envoi déterminé par le biais d'informations de rétroaction provenant du deuxième nœud de communication.

4. Procédé selon la revendication 1, dans lequel le mode d'envoi des informations d'état comprend :
dans un cas où un PDCCH existe dans une ressource de domaine temporel correspondant au groupe de ressources, l'envoi des informations d'état par le biais d'une ressource sur un symbole du PDCCH ; ou
l'envoi des informations d'état par le biais d'une ressource sur un symbole après un symbole du PDCCH.

5. Procédé selon la revendication 1, dans lequel
les informations d'état décrivent une utilisation des ressources d'une collection de ressources partielle dans le groupe de ressources.

6. Procédé selon la revendication 1, dans lequel
les informations d'état décrivent si le premier nœud de communication envoie des données par le biais d'une ressource dans le groupe de ressources ;
les informations d'état décrivent si le deuxième nœud de communication reçoit des données par le biais d'une ressource dans le groupe de ressources ;
les informations d'état décrivent si le deuxième nœud de communication essaie de recevoir des données par le biais d'une ressource dans le groupe de ressources ; ou
les informations d'état décrivent si le deuxième nœud de communication mesure, par le biais d'une ressource dans le groupe de ressources, au moins l'un parmi un canal, une interférence, un mode d'envoi et un mode de réception.

7. Procédé selon la revendication 1, dans lequel
les informations d'état comprennent un nombre M de niveaux d'informations d'état d'utilisation, dans lequel M est un nombre entier supérieur à ou égal à 2 ;
dans lequel au moins l'un parmi les M niveaux d'informations d'état d'utilisation est envoyé dans au moins un mode parmi un groupe constitué de : un PCDDH pour une retransmission ; un PCDDH pour une multidiffusion ; et une signalisation de niveau haut.

8. Procédé selon la revendication 1, dans lequel
une mise en correspondance existe entre un schéma de codage et de modulation utilisé pour un canal pour l'envoi des informations d'état et un schéma de codage et de modulation d'un canal de données affecté par le groupe de ressources.

9. Procédé selon la revendication 1, dans lequel
un faisceau utilisé pour un canal pour l'envoi des informations d'état est le même qu'un faisceau utilisé pour un canal de données affecté par le groupe de ressources.

10. Procédé selon la revendication 1, dans lequel
le groupe de ressources est divisé en un nombre Y de collections de ressources, dans lequel Y est un nombre entier supérieur à ou égal à X.

11. Procédé selon la revendication 1, dans lequel
le groupe de ressources est configuré sur le deuxième nœud de communication par le premier nœud de communication par le biais d'un nombre A de niveaux de signalisation, dans lequel A est un nombre entier supérieur à ou égal à 1 ;
dans lequel les A niveaux de signalisation comprennent au moins l'une parmi un groupe constitué de : une signalisation de niveau haut ; et une signalisation de contrôle d'accès au support, MAC ;
dans lequel dans un cas où A est supérieur 1, une dépendance existe entre les A niveaux de signalisation, dans lequel la dépendance est utilisée pour l'indication d'une relation entre un groupe de ressources configuré par le biais d'une première signalisation dans les A niveaux de signalisation et un groupe de ressources configuré par le biais d'une deuxième signalisation dans les A niveaux de signalisation.

12. Appareil de traitement de groupe de ressources, au sein d'un premier nœud de communication sans fil, **caractérisé par le fait qu'**il comprend :
un module de génération (92), qui est configuré pour générer des informations d'état d'un groupe de ressources, dans lequel les informations d'état sont identifiées par un nombre X de bits, X est un nombre entier supérieur à ou égal à 1, et une valeur de X est déterminée par le biais d'une négociation entre le premier nœud de communication sans fil et un deuxième nœud de communication sans fil ; et
un module d'envoi (94), qui est configuré pour envoyer les informations d'état au deuxième nœud ;
dans lequel le module d'envoi comprend l'une parmi : une troisième unité d'envoi configurée pour envoyer les informations d'état par le biais d'une ressource dans un créneau temporel d'un canal de commande de liaison descendante physique, PDCCH, correspondant à un canal de données affecté par l'utilisation du groupe de ressources ; une quatrième unité d'envoi configurée pour envoyer les informations d'état par le biais d'une ressource dans un créneau temporel après un créneau temporel d'un PDCCH correspondant à un canal de données affecté par l'utilisation du groupe de ressources ; une cinquième unité d'envoi configurée pour envoyer les informations d'état par le biais d'une ressource dans un créneau temporel d'un canal de données affecté par l'utilisation du groupe de ressources ; ou une sixième unité d'envoi configurée pour envoyer les informations d'état par le biais d'une ressource dans un créneau temporel après un créneau temporel d'un canal de données affecté par l'utilisation du groupe de ressources.

13. Dispositif de communication sans fil, comprenant : une mémoire et un ou plusieurs processeurs ;
dans lequel la mémoire est configurée pour stocker un ou plusieurs programmes ; et
lorsque les un ou plusieurs programmes sont exécutés par les un ou plusieurs processeurs, de sorte que les un ou plusieurs processeurs mettent en œuvre le procédé selon l'une quelconque des revendications 1 à 11.

14. Support de stockage stockant des programmes d'ordinateur, dans lequel les programmes d'ordinateur, lors de leur exécution par un processeur d'un dispositif de communications sans fil, mettent en œuvre le procédé selon l'une quelconque des revendications 1 à 11.
